Europäisches Patentamt

European Patent Office

Office européen des brevets

(11) Veröffentlichungsnummer: **0 174 419**
**B1**

(12) **EUROPÄISCHE PATENTSCHRIFT**

(45) Veröffentlichungstag der Patentschrift: 25.04.90

(51) Int. Cl.⁵: **H 04 Q 7/04**

(21) Anmeldenummer: 85100963.9

(22) Anmeldetag: 31.01.85

(54) **Funkfernsprechsystem.**

(30) Priorität: 23.02.84 DE 3406501

(43) Veröffentlichungstag der Anmeldung:
19.03.86 Patentblatt 86/12

(45) Bekanntmachung des Hinweises auf die
Patenterteilung:
25.04.90 Patentblatt 90/17

(84) Benannte Vertragsstaaten:
AT CH DE FR GB IT LI NL

(56) Entgegenhaltungen:
EP-A-0 037 519
DE-A-2 659 635
US-A-3 663 762

NTG FACHBERICHTE, Band 61, 23.-25.
November 1977, Seiten 94-99, Berlin, DE; G.H.
SCHILDT: "Ein Zeitsynchrones
Datenkommunikationssystem"

(73) Patentinhaber: ANT Nachrichtentechnik GmbH
Gerberstrasse 33
D-7150 Backnang (DE)

(73) Patentinhaber: ROBERT BOSCH GMBH
Postfach 50
D-7000 Stuttgart 1 (DE)

(72) Erfinder: Budnik, Norbert, Dipl.-Ing.
Kantstrasse 23
D-7150 Backnang (DE)
Erfinder: Ketterling, Hans-Peter, Dipl.-Ing.
M.v.Richthofenstrasse 2
D-1000 Berlin 42 (DE)

Courier Press, Leamington Spa, England.

## Beschreibung

Die Erfindung betrifft ein automatisches Funkfernsprechsystem mit ortsbeweglichen Sende-Empfangsstationen (Funkteilnehmerstellen) gemäß Oberbegriff des Patentanspruchs 1. Solche Funkfernsprechsysteme sind bekannt, beispielsweise durch die DE-PS 27 27 808.

Bei solchen Funkfernsprechsystemen ist eines der Probleme das Umschalten der Funkfrequenzen und das Übernehmen des ortsbeweglichen Funkteilnehmers von einer benachbarten Feststation bei einem Funkbereichswechsel, d.h. wenn der bewegliche Funkteilnehmer aus dem Funkbereich der einen Feststation in den Funkbereich einer Nachbarstation wechselt. Hierbei soll der Funkteilnehmer und sein Gesprächspartner möglichst nur kurzzeitig unterbrochen sein. Die nach der obigen Deutschen Patentschrift erreichbare minimale Umschaltzeit von etwa 250 Milisekunden ist deutlich hörbar.

Durch die DE-PS 21 63 424 ist ein Funkfernsprechsystem bekanntgeworden, das eine Fernsprechvermittlungseinrichtung zur Vermittlung von Sprechwegen zwischen den ortsfesten Sprechfunkzentralen und den beweglichen Sprechfunkstellen innerhalb der betreffenden Sprechnetzbereiche vorsieht und wobei die Fernsprechvermittlungseinrichtung eine zweifach belegungsfähige Amtsleitung aufweist, die in Abhängigkeit von der Bewegung der beweglichen Sprechfunkstellen zwischen den Sprechnetzbereichen zur Neufestlegung der Leitungsverbindungen zwischen der Fernsprechvermittlungseinrichtung und den Sprechfunkzentralen unter Aufrechterhaltung eines ununterbrochenen Sprechverkehrs ansteuerbar ist. Ein solches Funkfernsprechsystem ist aufwendig und hat den Nachteil der gleichzeitigen Belegung zweier Amtsleitungen, wobei sogar hochwertige Fernleitungen durch diese Belegung für anderen Verkehr ausgeschlossen werden.

Durch die Europäische Patentanmeldung entsprechend der deutschen DE-A-30 09 309 ist ein mobiles Funknetz mit einer Anzahl Funkkonzentratoren in zellularer Anordnung bekanntgeworden, wobei zwischen den ortsfesten Funkkonzentratoren und den beweglichen Teilnehmerstationen mittels eines digitalen Organisationskanals Verbindungsdaten ausgetauscht werden können. Dieser Organisationskanal ist dabei unter Einsatz einer netzweiten Synchronisation als Mehrfachzugriffskanal mit einem periodischen Rahmen ausgestattet, der eine Anzahl von Zeitschlitzen aufweist. Mit Hilfe dieses Organisationskanals ist es möglich, im funkbereich-überschreitenden Verkehr geringe Umschaltzeiten von einigen Zeitschlitzen zu erreichen. Lösungen zum unterbrechungsfreien Umschalten bei einem Funknetzbereichs überschreitenden Verkehr sind nicht angegeben, ebenso Lösungen für Drahtwegumschaltungen im Verkehr mit Teilnehmern eines Fernsprechdrahtnetzes oder zwischen Funkteilnehmern, deren Funknetzbereiche sehr weit auseinander liegen.

In der DE-A- 32 15 292 ist eine Funkrufanlage zur Versorgung einer Region vorgeschlagen worden, bei der die Region in einzelne Versorgungsgebiete aufgeteilt sind, innerhalb welcher jeweils im synchronen Gleichwellenfunkbetrieb gearbeitet wird und wobei die Zentralen innerhalb dieser Versorgungsgebiete hochfrequenzmäßig autark arbeiten mittels langfristig hochfrequenzstabiler Steuersender. Bei einer solchen Anlage ist das Problem der Funkfrequenzumschaltungen bei einem Funkbereichswechsel nicht gegeben.

Aufgabe der vorliegenden Erfindung war es deshalb, ein automatisches Funkfernsprechsystem der eingangs genannten Art anzugeben, das bei Funkbereichswechseln der ortsbeweglichen Funkteilnehmer, insbesondere bei Netzbereichsüberschreitungen, die Umschaltung der Sprechfunkfrequenzen und von Funk-Draht-Verbindungen des öffentlichen Fernmeldenetzes in möglichst kurzer Zeit zu ermöglichen, ohne daß die beteiligten Teilnehmer dies als Störung empfinden. Dies sollte mit möglichst wenig aufwendigen Mitteln realisiert werden können.

Die Lösung erfolgt mit den im Patentanspruch 1 gekennzeichneten Merkmalen.

Die Erfindung ruht auf der Idee, alle notwendigen Umschaltungen von Drahtund Funkfernmeldewegen, die bei Funkbereichswechsel, hauptsächlich bei netzbereichsüberschreitenden Funkbereichswechseln, notwendig werden, in einer Aufbau- und Vorbereitungsphase erstens die günstigen Ersatzwege zu finden, zweitens diese Ersatzwege vorbereitend zu belegen und drittens, wenn alle Vorbereitungen abgeschlossen sind, zu einem netzweiten synchronen Zeitpunkt, der dann sehr kurz ausfallen kann, alle notwendigen Umschaltungen einheitlich durchzuführen. Auf diese Weise ist es möglich, daß die Teilnehmer, ohne es zu merken, ihr Gespräch auf einem ganz anderen Fernmeldeweg fortsetzen können. Eine solche Vorgehensweise ist nur dann möglich, wenn netzweit ein synchroner Takt vorliegt, beispielsweise ein Sekundentakt, so daß die Umschaltung praktisch zum gleichen Zeitpunkt und damit sehr kurzzeitig erfolgen kann.

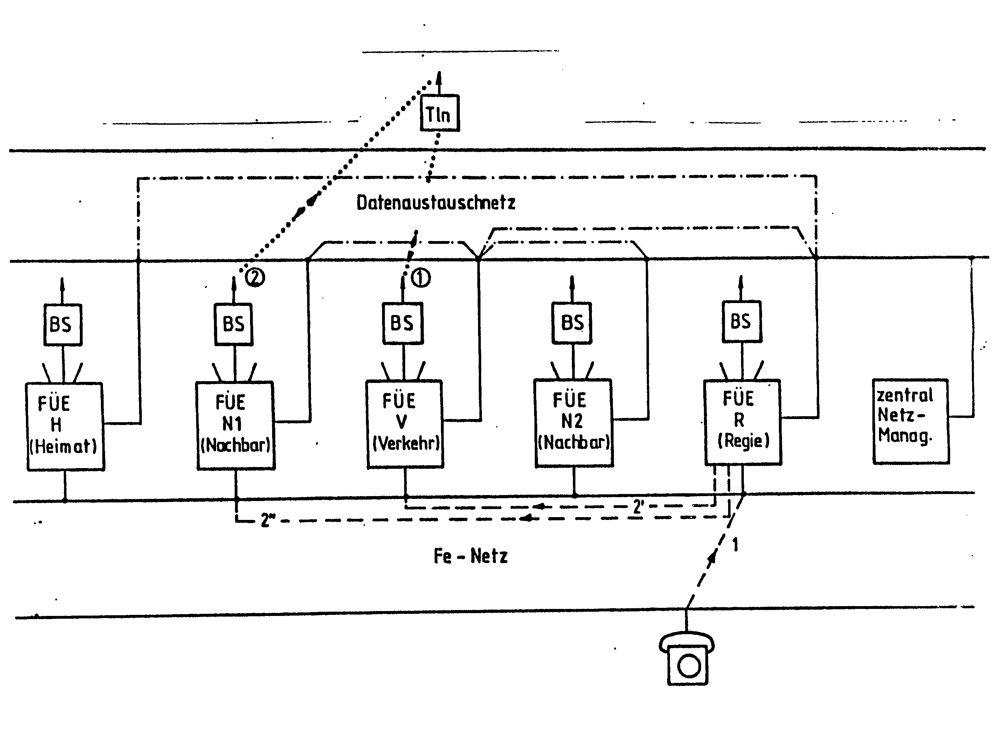

Optimale Ausgestaltungen finden sich in den Unteransprüchen. Es folgt nun die Beschreibung der Erfindung anhand der Figur.

Die Figur zeigt die Netzstruktur, wobei das öffentliche Fernsprechnetz Fe-Netz und das Datenaustauschnetz dargestellt sind. An diese beiden Netze sind Funküberleiteinrichtungen FÜE angeschlossen, an die mehrere ortsfeste Sende-Empfangsstationen BS (beispielsweise bis zu jeweils 7) angeschlossen sind. Die Funküberleiteinrichtungen FÜE haben, bezogen auf den Teilnehmer, verschiedene im folgenden beschriebene Funktionen.

Die ortsbeweglichen Funkteilnehmer Tln sind jeweils einer Heimat-Funküberleiteinrichtung FÜE-H zugeordnet, in welcher ihre Adressen registriert sind. Verläßt ein ortsbeweglicher Funkteilnehmer seinen angestammten Funküberleiteinrichtungsbereich, so wird der neue Aufenthaltsort, d.h. die dafür zuständige Funküberleiteinrichtung, registriert. Die Registrierung wird laufend aktualisiert, so daß der jeweilige Funküberleitrichtungsbereich, in dem sich der ortsbewegliche Teilnehmer augenblicklich aufhält, in der Heimatfunküberleiteinrichtung FÜE-H stets bekannt ist. Diejenige Funküberleiteinrichtung, in der sich der mobile Funkteilnehmer augenblicklich aufhält, heißt FÜE-V, über sie wird sein Verkehr während seines Aufenthaltes in diesem Bereich einer ihr zugeordneten ortsfesten Sende-Empfangsstation BS abgewickelt. Die der Funküberleiteinrichtung FÜE-V benachbarten Funküberleiteinrichtungen heissen FÜE-N. Bei einem bereichsüberschreitenden Ortswechsel wird der Funkteilnehmer an eine dieser benachbarten Funküberleiteinrichtungen übergeben. Informationen über die Empfangsverhältnisse werden schon zur Vorbereitung eines solchen Wechsels zwischen den beteiligten Funküberleiteinrichtungen ausgetauscht. Die erste, beim Aufbau eines Gesprächs erreichte Funküberleiteinrichtung heißt FÜE-R, in der Figur über den Fernmeldeweg 1 von einem Teilnehmer des Fernsprechdrahtnetzes erreicht, führt übergeordnet Regie und behält diese Funktion auch während des ganzen Gespräches bei. Der Datenverkehr für den Aufbau, Abbau oder Wechsel eines Gesprächs zwischen der Heimatfunküberleiteinrichtung, der den augenblicklichen Verkehr abwickelnden Funküberleiteinrichtung FÜE-V und den benachbarten Funküberleiteinrichtungen FÜE-N läuft über die regieführende Funküberleiteinrichtung FÜE-R. Des weiteren ist eine Zentrale für Netzüberwachung und -Management vorgesehen, welche Einbuchungen, Gebührenregistrierung, Berechtigungsüberprüfungen und Fehleranzeigen übernimmt, wobei der Informationsaustausch mit allen Funküberleiteinrichtungen erfolgt. Für den Datenaustausch zwischen den Funküberleiteinrichtungen für die geschilderten Abläufe bis zum Gesprächsaufbau und während des Abbaus dient das Datenaustauschnetz. Nach Aufbau der Verbindung und während des Gesprächs läuft die Signalisierung zum Teil über das Fernsprechnetz, z.B. bei Weiterschaltung während des Gesprächs.

Im folgenden seien die Vorgänge während eines Gesprächsaufbaus näher erläutert.

Der ortsbewegliche Funkteilnehmer Tln erhält durch Einschalten seines Geräts, wobei er sich durch seine Teilnehmernummer identifiziert, Zugriff zu einem Organisationskanal, über den die Verkehrsdaten zwischen der ortsfesten Sende-Empfangsstation BS und den in diesem Bereich operierenden Funkteilnehmern ausgetauscht werden. Die Meldung des Teilnehmers wird in der zuständigen Funküberleiteinrichtung FÜE-V registriert. Von dieser zuständigen Funküberleiteinrichtung FÜE-V wird dem Funktteilnehmer über die ortsfeste Station BS ein Zeitschlitz im Organisationskanal zugeteilt, in dem sich der weitere Datenaustausch abspielt. Die Anmeldung wird dem Funkteilnehmer von der zuständigen Funküberleiteinrichtung FÜE-V quittiert, und es erfolgt eine entsprechende Meldung von der den Verkehr führenden Funküberleiteinrichtung FÜE-V an seine Heimat-Funküberleiteinrichtung FÜE-H, welche über das Datenaustauschnetz an die erstere eine Quittung übergibt. Von der verkehrsführenden Funküberleiteinrichtung FÜE-V erhält der mobile Funkteilnehmer nun eine Wahlaufforderung, worauf dann im zugeordneten Zeitschlitz die gewünschte Teilnehmernummer gewählt wird. Nach einer Berechtigungsprüfung, bei der die entsprechende Anfrage von der regieführenden Funküberleiteinrichtung FÜE-R an die Heimatfunküberleiteinrichtung FÜE-H geht, wobei das Ergebnis auf dem gleichen Weg zurückgemeldet wird, stellt die regieführende Funküberleiteinrichtung FÜE-R im Fall der Berecht-igung die Verbindung über das öffentliche Fernsprechnetz her, über das auch die Signalisierung erfolgt. Die verkehrsführende Funküberleiteinrichtung FÜE-V, die hier auch Regie führt, teilt über die ortsfesten Sende-Empfangsstationen BS einen Funkkanal zu oder gibt gegebenenfalls Besetztmeldung. Nach Quittierung durch den Funkteilnehmer, wird im Fall des nichtbesetzten Teilnehmers der Funkkanal freigegeben. Kommt das Gespräch zustande, wird die Heimatfunküberleiteinrichtung FÜE-H von der regieführenden Funküberleiteinrichtung FÜE-R darüber informiert, daß der rufende Funkteilnehmer jetzt belegt ist. Während des Gesprächs wird die Signalisierungsinformation zwischen mobilem Funkteilnehmer und der zuständigen ortsfesten Sende-Empfangsstation BS über einen Hilfskanal des Gesprächskanals mit übertragen (der Funkkontakt über den Organisationskanal ist mit dem Aufbau der Gesprächsverbindung ausgeschaltet, d.h. Funkkontakt besteht lediglich über den Gesprächsfunkkanal). Der mobile Funkteilnehmer erhält von der ortsfesten Sende-Empfangsstation BS Daten zur Leistungseinstellung der Radiofrequenz, welche Daten aufgrund von Übertragungsqualitätsmessungen ermittelt werden. Eine laufende Gebührenzählung und -meldung erfolgt von der verkehrsführenden Funküberleiteinrichtung über die zuständige ortsfeste Station zum Funkteilnehmer, wobei in der verkehrsführenden FÜE-V die Gebühren aufsummiert und der aufgelaufene Betrag bei Gesprächsende oder bei Zellenwechsel (Funkbereichswechsel) an die regieführende Funküberleiteinrichtung FÜE-R gemeldet werden. Legt der mobile Funkteilnehmer auf, so wird dies an die verkehrsführende FÜE-V signalisiert, und der mobile Funkteilnehmer meldet sich im Organisationskanal zurück. Der Fernsprechweg wird ausgelöst von der verkehrsführenden FÜE-V zur regieführenden FÜE-R über das Datennetz und von der FÜE-R über das Fernsprechnetz, welch letztere das Gesprächsende an die Heimatfunküberleiteinrichtung FÜE-H und die Gesprächsgebühr an die Zentrale meldet. Legt der ortsfeste Teilnehmer auf, so erfolgt die Signalisierung über das Fernsprechnetz (Flackerschlußzeichen) an die verkehrsführende Funküberleiteinrichtung FÜE-V und die Auslösung auf dem Weg FÜE-V -FÜE-R -Fernsprechnetz. An den mobilen Teilnehmer ergehtvon der FÜE-V die Mitteilung "ortsfester Teilnehmer hat aufgelegt". Nach der Quittierung schaltet sich der mobile Teilnehmer erneut auf den Organisationskanal auf.

Empfangsverhältnisse, welche den Empfangspegel unter einen vorgegebenen Schwellwert sinken lassen, führen zu einem Funkbereichswechsel. Hierfür ist die Zuteilung eines neuen Funkfrequenzpaars erforderlich. Dazu werden Pegelmessungen in der Umgebung des augenblicklichen Standorts veranlasst. Der verkehrsführenden Funküberleiteinrichtung FÜE-V werden die Meßergebnisse und gegebenenfalls die Übernahmebereitschaft von den ortsfesten Empfangsstationen BS der eigenen Funküberleiteinrichtung FÜE-V und der Nachbar-Funküberleiteinrichtung FÜE-N mitgeteilt. Bleibt der Teilnehmer im selben Funküberleiteinrichtungsbereich, so wird das Weiterreichen von der eigenen FÜE-V ohne weitere Signalisierung im Datennetz vorgenommen. Bei Weiterreichen an einen anderen Funküberleiteinrichtungsbereich wählt die FÜE-V die Nachbar-FÜE-N mit der besten Übertragungsqualität aus und veranlasst die regieführende FÜE-R, eine weitere Fernsprechverbindung, nämlich 2'', zur Nachbarfunküberleiteinrichtung FÜE-N1, welche die neue verkehrsführende FÜE-V wird, aufzubauen. Die noch verkehrsführende FÜE-V beauftragt die FÜE-N1, eine Kanalzuweisung vorzunehmen und das neue Kanalpaar zurückzumelden. Die FÜE-V gibt dies dem Teilnehmer durch, der es rückwärts über FÜE-V an FÜE-N1 quittiert. Die noch verkehrsführende FÜE-V erteilt darauf den Umschaltebefehl an Teilnehmer, FÜE-N1 und FÜE-R, welcher netzweit synchron mittels des im ganzen Netz zur Verfügung stehenden Taktes quasi zum selben Zeitpunkt sehr schnell durchgeführt wird. Es wird damit im Fernsprechnetz vom Fernmeldeweg 2' auf den Fernmeldeweg 2'' umgeschaltet und im Funknetz von dem Funkfernmeldeweg ①, das ist der Weg vom ortsbeweglichen Teilnehmer Tln über die zuständige Feststation BS zur verkehrsführenden FÜE-V-alt auf den Funkfernmeldeweg ②, das ist der Weg vom ortsbeweglichen Funkteilnehmer Tln über eine neue nunmehr zuständige ortsfeste Station BS zur ehemals Nachbarfunküberleiteinrichtung FÜE-N1, welche nunmehr die Funktion der neuen verkehrsführenden Funküberleiteinrichtung inne hat und den neuen Standort an die Heimatfunküberleiteinrichtung FÜE-H meldet und darüber eine Quittung erhält.

Bei einem Verbindungsaufbau vom ortsfesten Teilnehmer zum mobilen Teilnehmer kommt der ortsfeste Teilnehmer durch Wahl über den Weg 1 zu einer nächstgelegenen Funküberleiteinrichtung FÜE, die damit zur FÜE-R wird und bei der Heimateinrichtung FÜE-H anfrägt, in welchem Funküberleiteinrichtungsbereich sich der mobile Teilnehmer aufhält. Nach Feststellung des Aufenthaltsortes, also Festlegung der FÜE-V, gibt FÜE-R an FÜE-V die Teilnehmernummer und den Auftrag durch, den Teilnehmer zu rufen. Das mobile Gerät meldet sich, und FÜE-V teilt FÜE-R mit, daß der Teilnehmer gefunden ist, worauf FÜE-R FÜE-V über das Fernsprechnetz anwählt. FÜE-V teilt dem beweglichen Funkteilnehmer einen Funkkanal zu und erhält von ihm eine Quittung, worauf der Kanal freigegeben wird. Nach dieser Quittungsmeldung an FÜE-V, die an FÜE-R weitergereicht wird, meldet FÜE-R an FÜE-H den Belegungszustand. Der Datentransfer zwischen beweglichem Teilnehmer und der verkehrsführenden Funküberleiteinrichtung FÜE-V erfolgt dabei während des Gesprächs im Nutzkanal. Die ortsfeste Station BS steuert die Sendeleistung der mobilen Station. Legt bei Gesprächsende der mobile Teilnehmer Tln auf, so wird über die bestehende Verbindung von der FÜE-V über FÜE-R zum Fernsprechnetz hin ausgelöst. Der Funkteilnehmer erhält eine Quittung von FÜE-V. Die Meldung, daß der ortsbewegliche Teilnehmer nicht mehr belegt ist, geht über FÜE-R an FÜE-H. Legt der ortsfeste Teilnehmer auf, so wird vom Fernsprechnetz her über FÜE-R und FÜE-V ausgelöst. Auch hier teilt FÜE-R FÜE-H das Gesprächsende mit, wodurch also der mobile Teilnehmer wieder freigeworden ist. In beiden Fällen meldet sich der mobile Teilnehmer wieder auf dem Organisationskanal. Im Organisationskanal wird neben den Schaltdaten auch die Zeitmarke des netzweiten Taktes übertragen, durch welche eine Quarzuhr bei der mobilen Funkteilnehmerstelle nach jedem Gespräch oder Wiedereinschalten synchronisiert wird. Alternativ dazu kann auch jeder Funkteilnehmer mit einem Empfänger ausgerüstet werden, der die Zeitmarken des Langwellensenders DCF 77 Mainflingen bei Frankfurt zu empfangen vermag, welcher über eine europaweite Reichweite verfügt.

## Patentansprüche

1. Automatisches Funkfernsprechsystem mit ortsbeweglichen Sende-Empfangsstationen, die im Frequenzmultiplexverfahren über eine Anzahl Duplexsprechkanäle mit mehreren ortsfesten Sende-Empfangsstationen und über eine an die ortsfesten Stationen angeschlossene gemeinsame Überleiteinrichtung miteinander und mit den über die Überleiteinrichtung erreichbaren Teilnehmern eines Fernsprechdrahtnetzes oder mit den über eine weitere Überleiteinrichtung erreichbaren Funkteilnehmern verbunden werden können, wobei die ortsfesten Sende-Empfangsstationen mit ihrer zugehörigen Überleiteinrichtung über Kabelleitungen oder Richtfunk und die Überleiteinrichtungen untereinander über ein Datenaustauschnetz, insbesondere über das integrierte Datennetz IDN, verbunden sind, in dem Prozeduren zur Anmeldung, Registrierung, Suchen, Weiterreichen, Aktualisierung des Standorts, Auf und Abbau von Gesprächen abgewickelt werden, dadurch gekennzeichnet, daß Mittel derart vorhanden sind, daß bei einem Gespräch eines ortsbeweglichen Funkteilnehmers (Tln) mit einem Partner über das Fernsprechdrahtnetz (Fe-Netz), wobei aufgrund abnehmender Empfangspegel ein Funkbereichswechsel aus dem Funkbereich einer ortsfesten Sende-Empfangsstation (BS) der einen Überleiteinrichtung (FÜE-V) in den Funkbereich einer ortsfesten Sende-Empfangsstation (BS) einer anderen Überleiteinrichtung (FÜE-N1) für notwendig erachtet wird, mittels Ortung festgestellt wird, welche der umliegenden ortsfesten Sende Empfangsstationen (BS) dem ortsbeweglichen Funkteilnehmer (Tln) zuzuteilen ist,

daß diese Zuteilung aufgrund der augenblicklich freien Funkfequenzen mit einer vorläufigen Belegung erfolgt,

daß dem ortsbeweglichen Funkteilnehmer (Tln) die neuen Funkfrequenzen übermittelt werden,

daß eine Ersatzwegverbindung (2'') zwischen dem Partner und der anderen Überleiteinrichtung (FÜE-N1), der die dem ortsbeweglichen Funkteilnehmer vorläufig neu zugeteilte ortsfeste Sende-Empfangsstation zugeordnet ist, vorbereitend aufgebaut wird,

daß ein Takt vorgesehen ist, der netzweit allen Überleiteinrichtungen (FÜE), den ortsfesten Sende-Empfangsstationen (BS) und allen ortsbeweglichen Funkteilnehmerstellen (Tln) synchron zur Verfügung steht, daß allen an der Umschaltung beteiligten Stellen der Zeitpunkt einer einheitlichen Umschaltung auf die neuen Funkfrequenzen und auf die Ersatzwegverbindung (2'', ②) mitgeteilt wird,

daß der Zeitpunkt der Umschaltungen sehr kurz ist und in den Beginn eines der folgenden Takte fällt und daß die einheitliche Umschaltung zu diesem vorher ausgemachten Zeitpunkt netzweit synchron und automatisch erfolgt.

2. Funkfernsprechsystem nach Anspruch 1, dadurch gekennzeichnet, daß der Zeitpunkt der Umschaltungen mit dem Beginn des nächsten Taktes erfolgt.

3. Funkfernsprechsystem nach Anspruch 1 oder 2, dadurch gekennzeichnet, daß der Takt eine langsame Frequenz aufweist, beispielsweise im Sekundenbereich.

4. Funkfernsprechsystem nach Anspruch 3, dadurch gekennzeichnet, daß als Takt ein allgemein verfügbares Zeitnormal verwendet wird.

5. Funkfernsprechsystem nach Anspruch 4, dadurch gekennzeichnet, daß als Takt der Sekundentakt des Zeitsenders Mainflingen DCF 77 (Langwellensender bei Frankfurt) verwendet wird.

6. Funkfernsprechsystem nach Anspruch 5, dadurch gekennzeichnet, daß die Überleiteinrichtungen (FÜE) und die ortsfesten Sende-Empfangsstationen (BS) Empfänger zum Empfang des DCF 77 aufweisen.

7. Funkfernsprechsystem nach Anspruch 6, dadurch gekennzeichnet, daß die ortsbeweglichen Funkteilnehmer (Tln) hochgenaue Quarzuhren aufweisen, die zwischen den Gesprächen über eine Organisationskanalfunkverbindung, über welche die netzsynchrone Zeitmarke übertragen wird, von den ortsfesten Sende-Empfangsstationen (BS) her synchronisiert werden.

8. Funkfernsprechsystem nach einem der vorhergehenden Ansprüche, dadurch gekennzeichnet; daß die Übermittlung der neuen zugeteilten Sprechfunkfrequenzen zu den ortsbeweglichen Funkteilnehmerstellen (Tln) durch Einlagerung von Daten mit kleiner Bitrate in den bestehenden Sprechfunkkanal erfolgt.

**Claims**

1. Automatic radio-telephone system with mobile transmitting-receiving stations which can be connected in frequency division multiplex operation with several fixed transmitting-receiving stations by way of a number of duplex speech channels and one with the other by way of a common relay equipment connected to the fixed stations and with those subscribers of a telephone line network, who are reachable by way of the relay equipment, or with the radio subscribers who are reachable by way of a further relay equipment, wherein the fixed transmitting-receiving stations are connected with their associated relay equipment by way of cable lines or directional radio and the relay equipments are connected one among the other by way of a data exchange network, in particular by way of the integrated data network IDN, in which procedures for service application, registration, search, transfer, updating of the location and establishment and disconnection of conversations are dealt with, characterised thereby, that means are present in such a manner that during a conversation of a mobile radio subscriber (Tln) with a partner by way of the telephone line network (Fenet), during which a radio range change out of the radio range of a fixed transmitting-receiving station (BS) of the one relay equipment (FÜE-V) into the radio range of a fixed transmitting-receiving station (BS) of another relay equipment (FÜE-N1) is regarded as necessary by reason of falling reception level, it is ascertained by means of location finding which of the surrounding fixed transmitting-receiving stations (BS) is to be allocated to the mobile radio subscriber (Tln), that this allocation takes place with a provisional seizing on the basis of the presently free radio frequencies, that the new radio frequencies are communicated to the mobile radio subscriber (Tln), that an alternate route connection (2'') is preparatorily established between the partner and the other relay equipment (FÜE-N1), which is associated with the fixed transmitting-receiving station newly allocated provisionally to the mobile radio subscriber (Tln), that a cadence is provided, which is synchronously available throughout the network to all relay equipments (FÜE), to the fixed transmitting-receiving stations (BS) and to all mobile radio subscriber points (Tln), that the instant of a uniform switch-over to the new radio frequencies and to the alternate route connection (2'', ② ) is communicated to all points participating in the switch-over, that the instant of the switch-overs is very brief and falls into the beginning of one of the following cycles and that the uniform switchover takes place synchronously and automatically throughout the network at this previously arranged instant.

2. Radio-telephone system according to claim 1, characterised thereby, that the instant of the switch-overs takes place with the beginning of the next cycle.

3. Radio-telephone system according to claim 1 or 2, characterised thereby, that the cadence displays a slow frequency, for example in the range of seconds.

4. Radio-telephone system according to claim 3, characterised thereby, that a generally available time standard is used as cadence.

5. Radio-telephone system according to claim 4, characterised thereby, that the seconds cadence of the time transmitter Mainflingen DCF 77 (long wave transmitter near Frankfurt) is used as cadence.

6. Radio-telephone system according to claim 5, characterised thereby, that the relay equipments (FÜE) and the fixed transmitting-receiving stations (BS) contain receivers for the reception of the DCF 77.

7. Radio-telephone system according to claim 6, characterised thereby, that the mobile radio subscribers (Tln) display highly accurate quartz clocks which are synchronised between the conversations from the fixed transmitting-receiving stations (BS) by way of an organisation channel radio connection, by way of which the network-synchronous timing mark is transmitted.

8. Radio-telephone system according to one of the preceding claims, characterised thereby, that the communication of the newly allocated speech radio frequencies to the mobile radio subscriber points (Tln) takes place through the inclusion of data at low bit rate into the existing speech channel.

**Revendications**

1. Système automatique de radiotéléphonie, avec des stations d'émission-réception mobiles qui, dans la mode multiplex en fréquence, peuvent être reliées par une pluralité de canaux duplex téléphoniques à plusieurs, stations d'émission-réception fixes et entre elles par un dispositif de transit commun raccordé aux stations fixes, et aux participants d'un réseau de téléphonie par fil que le dispositif de transit peut atteindre, ou aux participants hertziens pouvant être atteints par un autre dispositif de transit, les stations d'émission-réception fixes étant reliées à leur dispositif de transit associé par des lignes à câble ou par liaison hertzeinne, et les dispositifs de transit étant reliés entre eux par un réseau d'échange de données, notamment par le réseau à intégration de fonnées IDN dans lequel se déroulent les procédures d'annonce, enregistrement, recherche, transfert, actualisation de la position, établissement et suppression de communications, caractérisé par le fait que des moyens sont présents de manière telle que, lors d'une communication d'un participant hertzien mobile (Tln) avec un correspondant via le réseau de téléphonie par fil (réseau Fe), on détermine par localisation celle des stations d'émission-réception (BS) fixes environnantes qui doit faire l'objet d'une attribution au participant hertzien mobile (Tln), un changement dedomaine hertzien, du domaine hertzien d'une station d'émission-réception fixe (BS) d'un premier dispositif de transit (FÜE—V) au domaine hertzien d'une station d'émission-réception fixe (BS) d'un autre dispositif de transit (FÜE—N1), étant considéré comme nécessaire en se basant sur la décroissance du niveau de réception,

que ladite attribution s'effectue sur la base des fréquences hertziennes momentanément libres, avec une occupation provisoire,

que les nouvelles fréquences hertziennes sont communiquées au participant hertzien mobile (Tln),

qu'une liaison par voie de remplacement (2″) est établie préliminairement entre le correspondant et l'autre dispositif de transit (FÜE—N1) auquel est affectée la station d'émission-réception fixe nouvellement attribuée provisoirement au participant hertzien mobile,

qu'il est prévu un signal rythmé qui, sur l'étendue du réseau, est disponible de manière synchrone pour tous les dispositifs de transit (FÜE), les stations d'émission-réception fixes (BS) et tous postes de participants hertziens mobiles (Tln),

que l'instant d'une commutation uniforme sur les nouvelles fréquences hertziennes et sur la liaison par voie de remplacement (2″, ②) est communiqué à tous les postes participant à la commutation,

que l'instant des commutations est très court et tombe au début de l'un des signaux rythmés suivants, et

que la commutation uniforme s'effectue automatiquement et de manière synchrone dans l'étendue du réseau, à cet instant préalablement stipulé.

2. Système de radiotéléphonie selon revendication 1, caractérisé par le fait que l'instant des commutations se présente avec le début du signal rythmé suivant.

3. Système de radiotéléphonie selon revendication 1 ou 2, caractérisé par le fait que le signal rythmé présente une fréquence lente, par exemple dans le domaine de la seconde.

4. Système de radiotéléphonie selon revendication 3, caractérisé par le fait que l'on utilise en tant que signal rythmé un étalon de temps disponible d'une manière générale.

5. Système de radiotéléphonie selon revendication 4, caractérisé par le fait que l'on utilise en tant que signal rythmé le signal à rythmé de seconde de l'émetteur de signaux horaires de Mainflingen DCF 77 (émetteur à ondes longues près de Francfort).

6. Système de radiotéléphonie selon revendication 5, caractérisé par le fait que les dispositifs de transit (FÜE) et les stations d'émission-réception fixes (BS) présentent des récepteurs pour la réception de DCF 77.

7. Système de radiotéléphonie selon revendication 6, caractérisé par le fait que les participants hertziens mobiles (Tln) présentent des horloges à quartz de haute précision qui, entre les communications, sont synchronisées par les stations d'émission-réception fixes (BS), via une liaison hertzienne par canal d'organisation, par laquelle les marques de temps synchrones dans le réseau sont transmises.

8. Système de radiotéléphonie selon l'une des revendications précédentes, caractérisé par le fait que la transmission, aux participants hertziens mobiles (Tln), des nouvelles fréquences de radiotéléphonie attribuées s'effectue par insertion de données à petit débit binaire dans le canal radiotéléphonique en cours.

Datenaustauschnetz

BS     BS     BS     BS     BS

Tln

②     ①

FÜE H (Heimat)

FÜE N1 (Nachbar)

FÜE V (Verkehr)

FÜE N2 (Nachbar)

FÜE R (Regie)

zentral Netz-Manag.

2"     2'

Fe - Netz

1

EP 0 174 419 B1